# EUROPÄISCHE PATENTANMELDUNG

(11) **EP 0 525 553 A1**
(43) Veröffentlichungstag der Anmeldung: **03.02.1993**
(21) Anmeldenummer: 92112297.4
(22) Anmeldetag: 18.07.1992
(51) Int. Cl.: A01D 82/00

(54) **Mattenformer**

(30) Priorität: 31.07.1991 DE 9109635 U
(71) Anmelder: Schuster, Siegfried, D-86971 Peiting (DE)
(72) Erfinder: Schuster, Siegfried, D-86971 Peiting (DE)

(57) **Zusammenfassung**

Die Erfindung beschreibt ein Gerät, mit dem Faserstoffe zwischen Gleitboden (1) und exzentrisch gelagerten Platten (2,2a) durch Fördern, Schlagen und Verpressen zu einer Matte (16) geformt werden. Wird ein zerfasern und aufschließen von Pflanzen gefordert, kann dies durch einfache Wahl von Zähnen (9) im gleichen Arbeitsgang erfolgen. Wahlweise kann durch Anbringen einer elastischen Schürze (11) zum Trocknen die Matte auf den Boden gleiten oder durch Anbringen eines Behälters die unter hohem Druck austretende Matte (16) zu einem Ballen verpreßt werden.

## Beschreibung

Die Erfindung ist eine stationäre oder fahrbare Vorrichtung zum Aufschließen von Pflanzen (Gras, Getreide, Mais, Flachs, C4-Pflanzen, Kräuter usw.) und zum Formen einer Matte oder Ballen aus pflanzlichen Faserstoffen, welche zum Zwecke der Lagerung, des Transportes, der Weiterverarbeitung oder einer schnellen Trocknung des Fasermaterials teppichartig nach einem intensiven Zellaufschluß auf dem Boden oder zu Ballen verpreßt, abgelegt wird. Bekannt sind Verfahren bei den die bereits aufgeschlossenen Pflanzen als Fasermaterial, unter hohem Druck, zwei parallel geführte Bänder durchlaufen und so zu einer Matte geformt werden. Der Nachteil einer solchen Vorrichtung ist, daß neben den hohen Kosten zur Herstellung des Gerätes, das unter Druck und Zug stehende Bandmaterial durch harte Fremdkörper schnell beschädigt, bzw. zerstört wird. Außerdem hat sich herausgestellt, daß die Festigkeit der zu formenden Matte, durch reiben und schlagen der Oberfläche, erhöht wird. Dies ist bei Bandmattenformern nur bedingt möglich. Besonders mangelhaft ist der Aufschluß der Zellen bei Faserstoffen und das Zerstören der Oberflächenwachsschicht bei Bandmattenformern.

Die Erfindung hat sich die Aufgabe gestellt ein kostengünstiges Gerät zu schaffen, das in einem Arbeitsgang die Pflanzen aufschließt, zu einer Matte verpreßt und gegebenenfalls den hohen Druck des Mattenformers zum Herstellen von Ballen benutzt. Das Gerät muß Verschleißfest und gegenüber Fremdkörpern unempfindlich sein, die Faserstoffe klopfend und reibend zu einer Hatte verpressen, die Wachsschicht der Pflanzen zerstören und in seinen Herstellungskosten preisgünstiger liegen als herkömmliche Bandmattenformer.

Hierbei ist erfindungsgemäß vorgesehen, den Gutstrom über einen Gleitboden zu führen, wobei er von vorzugsweise scherenartig und exzentrisch arbeitenden Platten gefördert, gepreßt, aufgeschlossen, verdichtet und geklopft wird. Hierbei ist der aufnehmende Teil der beweglichen Platten über eine feste Pleuelstange von einem Exzenter geführt und beschreibt zwangsläufig eine Exzenterbewegung die auf den Gutstrom fördernd, klopfend und pressend wirkt. Dabei wird die Förderung vorwiegend von den spitzen Zähnen übernommen und der Aufschluß von den flachen Zähnen, die bis auf einen wählbaren Abstand, kleiner als Pflanzenstärken, auf den Gleitboden anfahren. Durch die tangierende Bewegung der beweglichen Platten wird ein Schlagen, Pressen und Reiben auf die Pflanzen ausgeübt. Die Pflanzen werden hierbei nicht abgeschnitten, sondern nur aufgeschlossen und zerfasert. Auch eine elypsische Führung erfüllt die gestellte Aufgabe. Ebenso ist eine parallele Führung der Preßplatte zum Gleitboden anwendbar. Der abgebende Teil der beweglichen Platten ist so gelagert, daß die exzentrische Bewegung des aufnehmenden Teiles als Längsbewegung mit leichter Drehbewegung auf das abgebende Teil der beweglichen Platten wirkt. Die hohen mechanischen Belastungen zerfasern die Pflanzen bei gleichzeitigem Zellaufschluß zusätzlich und zerstören die einem schnellen Trocknen hinderliche Wachsschicht der Pflanzen.

Die Lagerung im abgebenden Teil der beweglichen Platten kann beispielsweise als Rolle in einer U-Führung oder als abgerundetes Gleitstück, auf das obere bewegliche Teil des Mattenformers wirkend, ausgebildet sein. Um einen weitgehend kontinuierlichen Durchlauf des Fasermaterials zu erreichen ist es zweckmäßig die beweglichen Platten des Mattenformers mehrmals in ihrer Arbeitsbreite zu teilen, so daß der Gutstrom ständig von rechenartig ineinandergreifenden Teilen der beweglichen Platten übernommen, gepreßt, aufgeschlossen und gefördert wird. Außerdem kann die Unwucht der beweglichen Platten vermieden, zumindest erheblich gesenkt werden. Über eine federnde Lagerung des Gleitbodens oder und der beweglichen Platten, kann über den Federdruck der Grad des Aufschlusses und die Stärke der zu formenden Matte beeinflußt werden. Beim Durchlaufen eines harten Fremdkörpers kann durch Rückweichen des Gleitbodens, der sinnvollerweise aus mehreren getrennten Teilen besteht, oder der beweglichen Platte durch die federnde Lagerung ein Zerstören des Gerätes vermieden werden. Die beweglichen Platten des Mattenformers sind zum besseren Erfassen des Fasermaterials an der Aufnahmeseite mit Greifzähnen ausgestattet die sich zweckmäßigerweise in Richtung abgebenden Teiles der Platten verjüngen und auslaufen. Wird ein Pflanzenaufschluß gefordert, werden den spitzen Greifzähnen Aufschlußzähne mit großen rechteckigen Oberflächen nachgeschaltet. Auch ein gemischter Einsatz von Greif-und Aufschlußzähnen ist sinnvoll. Die Verpressung zu einer Matte erfolgt am nicht verzahnten Teil der beweglichen Platten zwischen Gleitboden und beweglichen Platten. Hier kann, unbeeinflußt von den Greifzähnen, eine in der Oberfläche glatte Matte entstehen. Die scherenartige Öffnung des Mattenformers, sowie die Wahl der Zahnform, kann, je nach Art des Pflanzenmaterials und des gewünschten Aufschlusses, beliebig gewählt werden. Wird beim Verpressen gleichzeitig ein Entwässern gewünscht, kann der Gleitboden mit Längs- oder Querschlitzen ausgestattet sein durch welche das, unter hohem Druck stehende, Fasermaterial entwässert wird. Wählbare Schneidstege trennen die Matte in Streifen während des Preßvorganges in Längsrichtung.

Um die beweglichen Anlagen die Matte während der Fahrt am Boden schonend abzulegen ist eine elastische Schürze vorgesehen, die am Ende des Gleitbodens befestigt ist und bis zum Boden reicht. Wird diese elastische Schürze durch einen Bügel, der fahrgeschwindigkeitsabhängig, z. B. durch abtasten des Laufrades, regelmäßig abgehoben bzw. gesenkt wird, kann eine wellenartige Bewegung der elastischen Schürze erzielt werden. Auf diese einfache Weise wird die geformte Matte in Wellen auf dem Boden abgelegt. Hierbei muß natürlich die Ausstoßgeschwindigkeit der Matte höher liegen als die Fahrgeschwindigkeit. Der Vorteil einer in Wellen abgelegten Matte ist der geringere Bodenkontakt und eine größere Akzeptanz von Differenzgeschwindigkeit zwischen Mattenausstoß und Fahrgeschwindigkeit. Der gleiche Effekt wird erreicht, falls die Matte zwischen zwei zahnradartigen Wellen geführt wird. Wird ein sofortiges Verpressen zu Ballen gewünscht, z. B. bei Silage oder trockenem Material, kann der unter hohen Druck stehende Auslauf der Matte unmittelbar nach dem Mattenformer mit einem Behälter kombiniert werden, der über einen zurückweichenen Boden den Gutstrom zu einem Ballen zusammenfaßt. Die ständig zurückweichenden Platten können ebenfalls für die Ballenverpressung genützt werden. Durch die Wahl von Förder- oder Aufschlußzähnen wird nach Bedarf ein höherer Aufschluß oder ein hoher Preßdruck erreicht. Eventuelles Binden der Ballen, sowie der Behälter zum Ballenformen ist Stand der Technik und wird nicht näher erläutert.

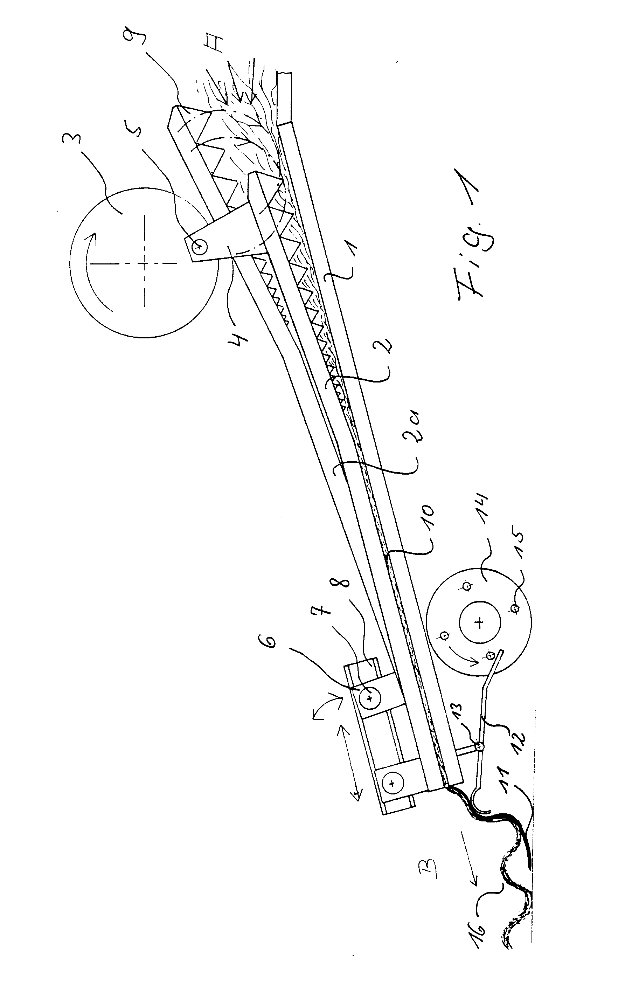

Weitere Einzelheiten der Erfindung werden anschließend anhand von zwei Zeichnungen erklärt. Hierbei zeigt Fig. 1 die Seitenansicht eines fahrbaren Mattenformers mit dem Gleitboden (1), den beweglichen Platten (2 + 2a), sowie das Exzenterrad (3) mit der Pleuelstange (4) und dessen Lagerung (5). Die exzentrische Bewegung der A-Seite der beweglichen Platten (2 + 2a) wird auf der B-Seite über den Lagerbock (6 + 6a) und den Rollen (7 + 7a) sowie der Führung (8), sowie der U-Führung (8), in eine Längsbewegung umgeleitet. Die Lagerungen (7 + 7a) sind geeignet eine Drehbewegung aufzunehmen. Führt man auf der A-Seite Faserstoffe zu, werden diese durch die beweglichen Platten (2 + 2a) erfaßt und über die Greiferzähne (9) verdichtet und durch die exzentrische Bewegung in Richtung B durch den sich verjüngenden Kanal (10) gepreßt. Hierbei wird durch das scherenartige Öffnen und das exzentrische Bewegen der beweglichen Platten (2 + 2a) der Faserstrom geschlagen, verdichtet und in Richtung B-Seite verpreßt. Durch die federnde Lagerung der Gleitplatte (1) und oder der beweglichen Platten (2 + 2a) (Federn nicht dargestellt) ist die Stärke des Gutstromes (16), sowie die Austrittsgeschwindigkeit, beeinflußbar. Durch die elastische Schürze (11) kann der Gutstrom sanft zum Boden gleiten. Wird ein wellenartiges Ablegen der Matte gewünscht, kann durch Bewegen des Hebels (12) über das Lager (13), und einem sich von der Fahrgeschwindigkeit abhängigen Laufrad (14), mit den beliebig einzusetzenden Bolzen (15) eine Wellenbewegung der Schürze (11) und somit eine wellenartige Ablage der Matte (16) bewirkt werden. Wegen der Übersichtlichkeit der Zeichnung wurde auf den Antrieb der beweglichen Platten (2a) verzichtet, ebenso auf das Fahrgestell des fahrbaren Mattenformers.

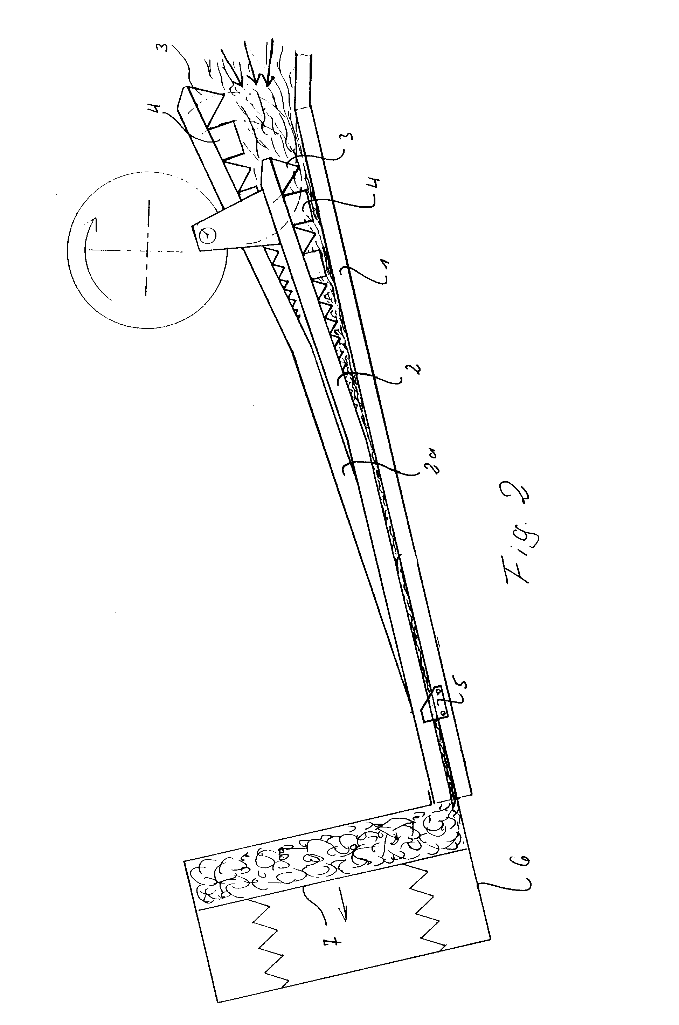

Figur 2 zeigt einen Mattenformer, der während der Verdichtungsphase gleichzeitig das Pflanzenmaterial zwischen den Gleitboden (1) und den beweglichen Platten (2 + 2a) aufbereitet. Die beweglichen Platten sind hierbei mit Greifzähnen (3) und Aufbereitungszähnen (4) ausgestattet. Der Gutstrom kann mit beliebig wählbaren Schneidstegen (5) in Streifen geschnitten werden. Unmittelbar nach dem Mattenformer ist ein Preßbehälter (6) montiert, der die unter hohem Druck auslaufende Matte übernimmt und mittels federnd gelagertem Boden zu einem Ballen formt.

## Patentansprüche

1. Vorrichtung zum Aufschließen von Pflanzen und zum Verpressen von Faserstoffen zu einer Matte dadurch gekennzeichnet, daß Pflanzen zwischen Gleitboden und beweglichen, scherenartig gelagerten und exzentrisch bewegten Platten befördert, geschlagen, aufgeschlossen und verpreßt werden.

2. Vorrichtung nach Anspruch 1 dadurch gekennzeichnet, daß die beweglichen, scherenartig gelagerten und exzentrisch arbeitenden Platten in Ihrer Arbeitsbreite beliebig geteilt sind und rechenartig ineinandergreifen.

3. Vorrichtung nach Anspruch 1 und 2 dadurch gekennzeichnet, daß die beweglichen Platten am aufnehmenden Teil mit Greifzähnen ausgestattet sind, die sich in Richtung abgebendes Teil verjüngen und auslaufen.

4. Vorrichtung nach Anspruch 1 bis 3 dadurch gekennzeichnet, daß die beweglichen Platten wählbar mit Greifzähnen und Aufschlußzähnen ausgestattet sind.

5. Vorrichtung nach Anspruch 1 bis 4 dadurch gekennzeichnet, daß die beweglichen Platten durch ihre Bewegung das Pflanzgut erfassen, befördern, gegebenenfalls aufschließen, verdichten und durch den glatten, nicht verzahnten Teil, mit dem Gleitboden gebildeten Kanal, zu einer Matte verpressen.

6. Vorrichtung nach Anspruch 1 bis 5 dadurch gekennzeichnet, daß die beweglichen Platten an ihrem aufnehmenden Teil durch Exzenter angetrieben sind.

7. Vorrichtung nach Anspruch 1 bis 6 dadurch gekennzeichnet, daß am abgebenden Teil der beweglichen Platten eine Lagerung vorgesehen ist, die lediglich ein Verdrehen und Längsverschieben der beweglichen Platte ermöglicht.

8. Vorrichtung nach Anspruch 1 bis 7 dadurch gekennzeichnet, daß der Gleitboden und oder die beweglichen Platten, federnd gelagert sind um so den Gutstrom anzupressen und Fremdkörpern auszuweichen.

9. Vorrichtung nach Anspruch 1 bis 8 dadurch gekennzeichnet, daß der Gleitboden mit Schlitzen ausgestattet ist über welche eine Entwässerung der Faserstoffe erfolgen kann.

10. Vorrichtung nach Anspruch 1 bis 9 dadurch gekennzeichnet, daß am Ende des Gleitbodens eine elastische Schürze angebracht wird, die bis zum Boden reicht und durch einen Bügel die elastische Schürze, Fahrgeschwindigkeitsabhängig, bewegt wird und so ein wellenartiges Ablegen der Matte erfolgt.

11. Vorrichtung nach Anspruch 1 bis 10 dadurch gekennzeichnet, daß die anstehende Matte durch mindestens zwei zahnradähnliche Wellen geführt wird, die den Gutstrom wellenartig formen.

12. Vorrichtung nach Anspruch 1 bis 11 dadurch gekennzeichnet, daß durch wählbare Schneidstege die Matte in Längsrichtung in Streifen geschnitten wird.

13. Vorrichtung nach Anspruch 1 bis 12 dadurch gekennzeichnet, daß die unter hohem Druck anstehende Matte, gegebenenfalls mittels der ständig zurückweichenden, beweglichen Platten, in einem Behälter zu einem Ballen verpreßt wird.
